# EUROPÄISCHE PATENTANMELDUNG

(11) **EP 1 962 448 A1**
(43) Veröffentlichungstag der Anmeldung: **27.08.2008**
(21) Anmeldenummer: 07103018.3
(22) Anmeldetag: 23.02.2007
(51) Int. Cl.: H04J 3/06, H04L 25/49, H04L 25/03

(54) **Verfahren und Vorrichtung zum Übertragen eines seriellen Datenrahmens**

(71) Anmelder: INOVA Semiconductors GmbH, 81671 München (DE)
(72) Erfinder: Neumann, Roland, 81671 München (DE); Riedel, Michael, 81671 München (DE)
(74) Vertreter: Röss, Walter Josef Alfred

(57) **Zusammenfassung**

Ein serieller Datenrahmen weist einen Nutzdatenrahmen und einen Synchronisationsrahm auf. Zusätzlich zu dem Nutzdatenrahmen können ebenso in dem Synchronisationsrahmen Nutzdaten übertragen werden. Es ist ein besonderes Bitmuster vorgesehen, welches in dem Synchronisationsrahmen zu vorbestimmten Zeiten übertragen wird. Die Folge von derartigen Bitmustern und die Position ihres Vorhandenseins in dem Synchronisationsrahmen sind einem Sender und einem Empfänger des seriellen Datenrahmens bekannt, wodurch eine Synchronisation der Übertragung des seriellen Datenrahmens durchgeführt werden kann. Weiterhin können Nutzdaten mittels einer logischen Verknüpfung mit einer Maske derart maskiert werden, dass eine maximal zulässige Länge von aufeinanderfolgenden Bits eines gleichen Werts beschränkt wird.

## Beschreibung

### Technisches Gebiet

Die vorliegende Erfindung betrifft ein Verfahren und eine Vorrichtung zum Übertragen eines seriellen Datenrahmens.

### Stand der Technik

Im Stand der Technik ist es bekannt, Nutzdaten auf eine serielle Weise zwischen einem Sender und einem Empfänger zu übertragen. Bei einer derartigen seriellen Übertragung von Nutzdaten ist es zum Beispiel erforderlich, sicherzustellen, dass zwischen dem Sender und dem Empfänger eine Synchronisation eines verwendeten Takts vorhanden ist, um ein Wiedergewinnen der Nutzdaten auf der Seite des Empfängers zuzulassen.

### Darstellung der Erfindung

Es ist die Aufgabe der vorliegenden Erfindung, ein Verfahren und eine Vorrichtung zum Übertragen eines seriellen Datenrahmens zu schaffen, die ein zuverlässiges Übertragen des seriellen Datenrahmens und von darin vorhandenen Daten zulassen.

Diese Aufgabe wird hinsichtlich des Verfahrens mit den in Anspruch 1 und hinsichtlich der Vorrichtung mit den in Anspruch 13 angegebenen Maßnahmen gelöst.

Weitere vorteilhafte Ausgestaltungen der vorliegenden Erfindung sind Gegenstand der abhängigen Ansprüche.

Gemäß einem ersten Aspekt der vorliegenden Erfindung weist ein Verfahren zum Übertragen eines seriellen Datenrahmens die Schritte auf: Erzeugen mindestens eines Nutzdatenrahmens, in dem mindestens zu übertragende Nutzdaten vorhanden sind; Erzeugen mindestens eines Synchronisationsrahmens, in dem mindestens zu übertragende einer Synchronisation dienende Daten vorhanden sind; Ausbilden des seriellen Datenrahmens aus einer vorab definierten Folge des mindestens einen Nutzdatenrahmens und des mindestens einen Synchronisationsrahmens; Senden des seriellen Datenrahmens von einer Sendeeinrichtung zu einer Empfangseinrichtung; und Empfangen des gesendeten seriellen Datenrahmens an der Empfangseinrichtung, wobei in einer Mehrzahl von aufeinanderfolgenden seriellen Datenrahmen die der Synchronisation dienenden Daten in den Synchronisationsrahmen der seriellen Datenrahmen ein vorbestimmtes Muster aufweisen, in einer vorbestimmten Folge gesendet werden und an einer vorbestimmten Position in einem jeweiligen Synchronisationsrahmen eines jeweiligen seriellen Datenrahmens vorhanden sind.

Vorteilhaft weisen Synchronisationsrahmen der aufeinanderfolgenden seriellen Datenrahmen zu übertragende Nutzdaten auf.

Vorteilhaft weist der serielle Datenrahmen eine Mehrzahl von Nutzdatenrahmen und einen Synchronisationsrahmen auf.

Vorteilhaft wird das vorbestimmte Muster in Abhängigkeit von einer vorbestimmten Regel aus einer vorab definierten Menge an vorbestimmten Mustern ausgewählt, um die vorbestimmte Folge auszubilden.

Vorteilhaft weisen Nutzdatenrahmen und zu übertragende Nutzdaten aufweisende Synchronisationsrahmen einen Merker auf, der anzeigt, ob zu übertragende Nutzdaten invertiert sind.

Vorteilhaft mindestens ein Teil der zu übertragenden Nutzdaten vor dem Senden mittels einer logischen Verknüpfung mit einer Maske maskiert wird.

Vorteilhaft weist der Nutzdatenrahmen einen Merker auf, der anzeigt, ob ein Maskieren der zu übertragenden Nutzdaten durchgeführt worden ist oder nicht.

Vorteilhaft wird das Maskieren der zu übertragenden Nutzdaten in Abhängigkeit von einer maximal zulässigen Länge von aufeinanderfolgenden Bits eines gleichen Werts der zu übertragenden Nutzdaten durchgeführt.

Gemäß einem zweiten Aspekt der vorliegenden Erfindung weist ein Verfahren zum Übertragen eines seriellen Datenrahmens auf: Erzeugen mindestens eines Nutzdatenrahmens, in dem mindestens zu übertragende Nutzdaten vorhanden sind; Erzeugen mindestens eines Synchronisationsrahmens, in dem mindestens zu übertragende einer Synchronisation dienende Daten vorhanden sind; Ausbilden des seriellen Datenrahmens aus einer vorab definierten Folge des mindestens einen Nutzdatenrahmens und des mindestens einen Synchronisationsrahmens; Senden des seriellen Datenrahmens von einer Sendeeinrichtung zu einer Empfangseinrichtung; und Empfangen des gesendeten seriellen Datenrahmens an der Empfangseinrichtung, wobei mindestens ein Teil der zu übertragenden Nutzdaten vor dem Senden mittels einer logischen Verknüpfung mit einer Maske maskiert wird.

Vorteilhaft weist der serielle Datenrahmen eine Mehrzahl von Nutzdatenrahmen und einen Synchronisationsrahmen aufweist.

Vorteilhaft weist der Nutzdatenrahmen einen Merker auf, der anzeigt, ob ein Maskieren der zu übertragenden Nutzdaten durchgeführt worden ist oder nicht.

Vorteilhaft wird das Maskieren der zu übertragenden Nutzdaten in Abhängigkeit von einer maximal zulässigen Länge von aufeinanderfolgenden Bits eines gleichen Werts der zu übertragenden Nutzdaten durchgeführt.

Gemäß einem dritten Aspekt der vorliegenden Erfindung weist eine Vorrichtung zum Übertragen eines seriellen Datenrahmens Einrichtungen auf, die zum Durchführen eines Verfahrens nach einem der vorhergehenden Ansprüche ausgelegt sind.

### Kurze Beschreibung der Zeichnungen

Die vorliegende Erfindung wird nachstehend anhand eines Ausführungsbeispiels unter Bezugnahme auf die beiliegenden Zeichnungen näher erläutert.

Abbildung 1 zeigt eine schematische Darstellung eines Sende/Empfangssystems gemäß einem Ausführungsbeispiel der vorliegenden Erfindung.

Abbildung 2 zeigt eine schematische Darstellung einer Nomenklatur einer eine Abwärts- und eine Aufwärtsverbindung aufweisenden seriellen Verbindung.

Abbildung 3 zeigt eine schematische Darstellung einer Struktur eines abwärts zu übertragenden seriellen Datenrahmens unter Verwendung der erweiterten Backus-Naur-Form.

Abbildung 4 zeigt eine schematische Darstellung einer Definition von Funktionen in der in Abbildung 3 gezeigten Struktur.

Abbildung 5 zeigt eine schematische Darstellung der Definitionen von Funktionen in der in Abbildung 3 gezeigten Struktur, wobei Abbildung 5 eine Fortsetzung von Abbildung 4 ist.

Abbildung 6 zeigt eine schematische Darstellung der Definitionen von Funktionen in der in gezeigten Struktur, wobei Abbildung 6 eine Fortsetzung von Abbildung 5 ist.

Abbildung 7 zeigt eine schematische Darstellung einer Struktur eines aufwärts zu übertragenden seriellen Datenrahmens unter Verwendung der erweiterten Backus-Naur-Form.

Abbildung 8 zeigt eine schematische Darstellung einer Definition von Funktionen in der in Abbildung 7 gezeigten Struktur.

### Bester Weg zur Ausführung der Erfindung

Im folgenden Verlauf wird ein Ausführungsbeispiel der vorliegenden Erfindung unter Bezugnahme auf die beiliegenden Zeichnungen im Detail beschrieben.

Genauer gesagt werden nun ein Verfahren und eine Vorrichtung zum Übertragen eines seriellen Datenrahmens gemäß dem Ausführungsbeispiel der vorliegenden Erfindung im Detail beschrieben.

Vorab ist anzumerken, dass durchgängig durch die folgende Beschreibung des Ausführungsbeispiels der vorliegenden Erfindung die erweiterte Backus-Naur-Form bzw. EBNF verwendet wird, um Strukturen zu erläutern. Weiterhin werden Definitionen von Funktionen mittels Pseudocodes erläutert.

Zum Zwecke dieser Erläuterung ist die EBNF um Zeichen "<" und ">" erweitert, die Metazeichen mit einer speziellen Bedeutung sind und einen Start bzw. ein Ende einer geordneten bzw. indizierten Folge von Symbolen bezeichnen. Weiterhin werden zum Zwecke der Klarheit Funktionsaufrufe mit der Syntax Bezeichner(Parameter), wobei "Bezeichner" ein Platzhalter bzw. Name einer beliebigen Funktion ist und "Parameter" ein Parameter der Funktion ist, verwendet, um geschlossene Basisoperationen einzuschließen. Derartige Funktionen sind explizit definiert. Die nachstehend verwendeten Zusätze "ds", "us" und "sb" stehen für "abwärts", "aufwärts" bzw. "Seitenband".

Die am weitesten linke Position eines Elements, das Teil von Listen, Folgen oder Feldern von Elementen ist, wird als der höchste Index bezeichnet. Genauer gesagt ist das höchstwertigste Bit bzw. MSB das Bit an einer am weitesten linken Position und ist das niederwertigste Bit bzw. LSB das Bit an einer am weitesten rechten Position. Anders ausgedrückt startet das Indizieren mit null (0) und der Index der am weitesten rechten Position ist null (0). Eine erforderliche parallele/serielle Wandlung startet mit dem LSB. Genauer gesagt wird ein Bit mit einem niedrigeren Index vor irgendeinem Bit mit einem höheren Index von einem Sender gesendet und von einem Empfänger empfangen.

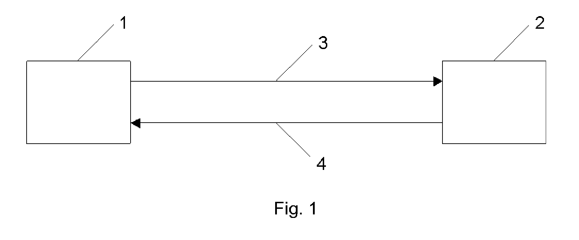

Abbildung 1 zeigt eine schematische Darstellung eines Sende/Empfangssystems gemäß einem Ausführungsbeispiel der vorliegenden Erfindung.

Das Sende/Empfangssystem gemäß dem Ausführungsbeispiel der vorliegenden Erfindung weist einen ersten Sender/Empfänger 1 und einen zweiten Sender/Empfänger auf. Zwischen den ersten und zweiten Sender/Empfängern 1 und 2 können serielle Aufwärts- und Abwärtsverbindungen zum Übertragen von seriellen Daten ausgebildet werden. Im Folgenden Verlauf wird davon ausgegangen, dass eine Verbindung zum Senden von seriellen Daten von dem ersten Sender/Empfänger 1 zu dem zweiten Sender/Empfänger 2 eine Abwärtsverbindung ist, während eine Verbindung zum Empfangen von seriellen Daten von dem ersten Sender/Empfänger 2 an dem ersten Sender/Empfänger 1 eine Aufwärtsverbindung ist. Es ist jedoch anzumerken, das jede beliebige Zahl von parallel und/oder antiparallel vorgesehenen Abwärts- und Aufwärtsverbindungen zwischen den ersten und zweiten Sender/Empfängern 1 und 2 vorhanden sein können. Die Anzahlen der Aufwärts- und Abwärtsverbindungen können zueinander unterschiedlich sein und jede von ihnen kann null sein. Je nach vorliegendem Fall, dient also jeder der ersten und zweiten Sender/Empfänger 1 und 2, als der zuvor erwähnte Sender, der zuvor erwähnte Empfänger oder eine Kombination von diesen.

Es ist anzumerken, dass die hierin verwendeten Sender/Empfänger einen bekannten, herkömmlichen Aufbau aufweisen und ihre Funktionsweise dazu ausgelegt ist, den hierin beschriebenen seriellen Datenrahmen senden und/oder empfangen zu können. Daher wird eine detailliertere Erläuterung des Aufbaus der Sender/Empfänger weggelassen.

Die zwischen den ersten und zweiten Sender/Empfängern 1 und 2 übertragenen seriellen Daten werden unter Verwendung von seriellen Datenrahmen übertragen, die zwischen der Abwärtsverbindung und der Aufwärtsverbindung, wie sie zuvor definiert worden sind, unterschiedlich sind. Es ist anzumerken, dass, obgleich hierin lediglich ein serieller Datenrahmen beschrieben ist, im Allgemeinen eine Mehrzahl von derartigen seriellen Datenrahmen seriell übertragen wird. Diese Mehrzahl von seriellen Datenrahmen weisen den gleichen Aufbau wie den des hierin beschriebenen seriellen Datenrahmens auf und werden auf die gleiche Weise verarbeitet.

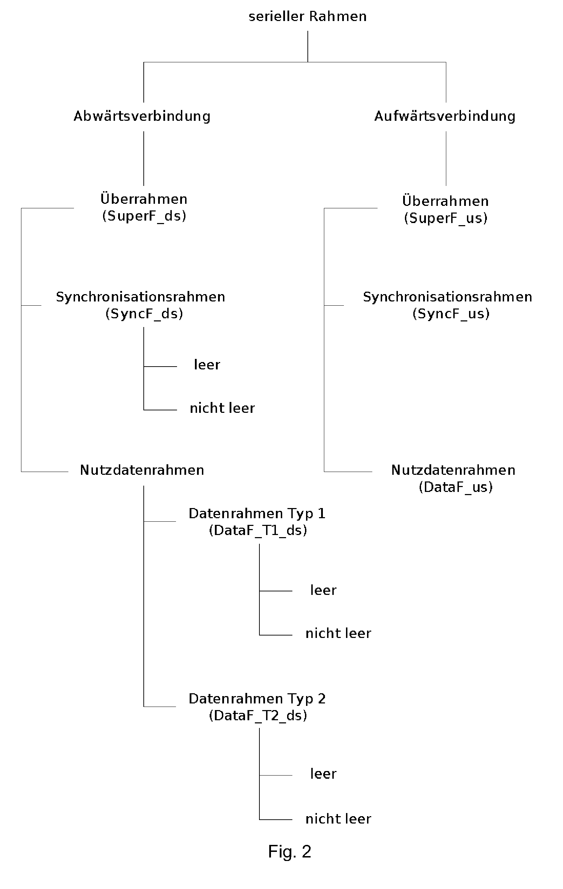

Abbildung 2 zeigt eine schematische Darstellung einer Nomenklatur einer eine Abwärts- und eine Aufwärtsverbindung aufweisenden seriellen Verbindung.

Eine serielle Verbindung weist eine Abwärtsverbindung und eine Aufwärtsverbindung auf.

Die Struktur der Abwärtsverbindung wird zuerst beschrieben. Ein serieller Rahmen der Abwärtsverbindung weist einen übergeordneten Überrahmen "SuperF_ds" auf. Dieser Überrahmen "SuperF_ds" weist weiterhin einen Synchronisationsrahmen "SyncF_ds" und einen Nutzdatenrahmen auf. Der Synchronisationsrahmen "SyncF_ds" kann zwei Zustände, das heisst "leer" und "nicht leer", aufweisen. Der Nutzdatenrahmen weist weiterhin einen Datenrahmen Typ 1 "DataF_T1_ds" und einen Datenrahmen Typ 2 "DataF_T2_ds" auf, die beide zwei Zustände "leer" und "nicht leer" aufweisen können.

Die Struktur der Aufwärtsverbindung wird nun beschrieben. Ein serieller Rahmen der Aufwärtsverbindung weist einen übergeordneten Überrahmen "SuperF_us" auf. Dieser Überrahmen "SuperF_us" weist weiterhin einen Synchronisationsrahmen "SyncF_us" und einen Nutzdatenrahmen "DataF_us" auf.

Die detaillierte Struktur der hierin gezeigten seriellen Verbindung wird nachstehend erläutert.

Im Folgenden werden die folgenden Definitionen verwendet.

Eine Rahmendisparität FD bezeichnet die Disparität bzw. Ungleichheit der Anzahl von "0" und "1", die einen seriellen Datenrahmen ausbilden. Die Rahmendisparität FD ist als eine Differenz zwischen der Anzahl von "0" und der Anzahl von "1" definiert. Eine größere Anzahl von "0" führt zu einer positiven Rahmendisparität FD, eine gleiche Anzahl von "0" führt zu einer Rahmendisparität FD von "0" und eine kleinere Anzahl von "0" führt zu einer negativen Rahmendisparität FD.

Die Leitungsdisparität LD bezeichnet die Disparität der Anzahl von "0" und "1 ", die bereits über die serielle Verbindung übertragen worden sind. Die Leitungsdisparität LD ist als eine Differenz zwischen der Anzahl von "0" und der Anzahl von "1" definiert. Eine größere Anzahl von "0" führt zu einer positiven Leitungsdisparität LD, eine gleiche Anzahl von "0" führt zu einer Leitungsdisparität LD von "0" und eine kleinere Anzahl von "0" führt zu einer negativen Leitungsdisparität LD.

Die Anzahl NCEB von aufeinanderfolgenden gleichen Bits ist die Anzahl von aufeinanderfolgenden Bits mit dem gleichen Wert. Anders ausgedrückt ist die Anzahl NCEB die Länge eines Bitvektors, welcher ein integraler Teil eines seriellen Datenrahmens ist, wobei Bits dieses Vektors den gleichen Wert aufweisen.

Wie es bereits zuvor erläutert worden ist, wird hierin die EBNF verwendet, um Strukturen zu erläutern. Weiterhin werden Definitionen von Funktionen mittels Pseudocodes erläutert. Folglich werden diese Strukturen nachstehend vom allgemeinen Aufbau hin zu immer weiteren Einzelheiten erläutert.

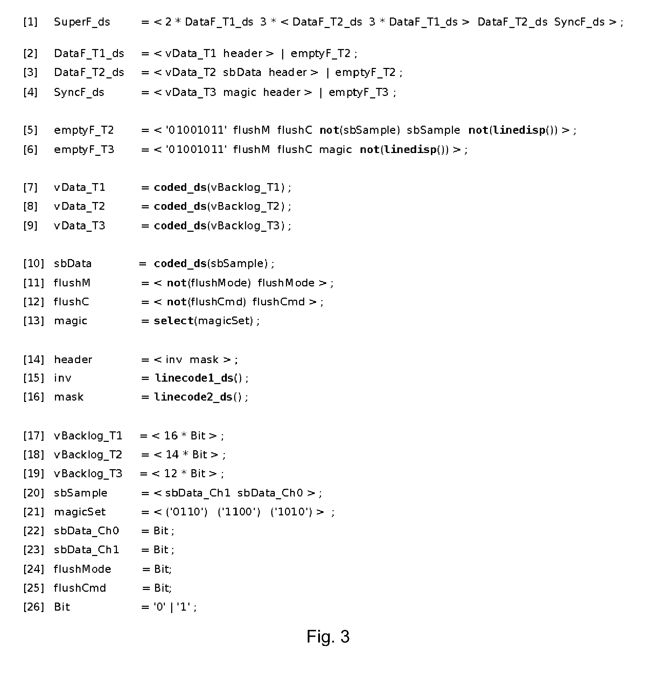

Abbildung 3 zeigt eine schematische Darstellung einer Struktur eines abwärts zu übertragenden seriellen Datenrahmens.

Diese Struktur des abwärts zu übertragenden Datenrahmens wird nachstehend im Detail erläutert.

Wie es in Zeile [1] ersichtlich ist, weist jeder serielle Überrahmen SuperF_ds eine Folge auf, die zwei Nutzdatenrahmen DataF_T1_ds aufweist, worauf dreimal ein Folge folgt, die einen Nutzdatenrahmen DataF_T2_ds und drei Nutzdatenrahmen DataF_T1_ds aufweist, worauf ein Nutzdatenrahmen DataF_T2_ds und ein Synchronisationsrahmen SyncF_ds folgen.

Wie es in Zeile [2] ersichtlich ist, weist der Nutzdatenrahmen DataF_T1_ds eine Folge aus vData_T1 und header auf oder weist statt dieser Folge emptyF_T2 auf. Wie es in Zeile [3] ersichtlich ist, weist der Nutzdatenrahmen DataF_T2_ds eine Folge aus vData_T2, sbData und header auf oder weist statt dieser Folge emptyF_T2 auf. Wie es in Zeile [4] ersichtlich ist, weist der Synchronisationsrahmen SyncF_ds eine Folge aus vData_T3, magic und header auf oder weist statt dieser Folge emptyF_T3 auf.

emptyF_T2 ist eine Folge, die eine Bitfolge "01001011", flushM flushC, not (sbSample), sbSample und not(linedisp()) aufweist, wie es in Zeile [5] ersichtlich ist. emptyF_T3 ist eine Folge, die eine Bitfolge "01001011 ", flushM, flushC, magic und not(linedisp()) aufweist, wie es in Zeile [6] ersichtlich ist.

Die zuvor verwendeten vData_T1, vData_T2 und vData_T3 sind wie folgt definiert. vData_T1 ist coded_ds(vBacklog_T1), vData_T2 ist coded_ds (vBacklog_T2) und vData_T3 ist coded_ds(vBacklog_T3), wie es in den Zeilen [7], [8] und [9] ersichtlich ist. Weiterhin sind die zuvor verwendeten sbData, flushM, flushC und magic wie folgt definiert. sbData ist coded_ds (sbSample), flushM ist eine Folge, die not(flushMode) und flushMode aufweist, flushc ist eine Folge, die not(flushCmd) und flushCmd aufweist und magic ist select(magicSet), wie es in den Zeilen [10], [11], [12] und [13] ersichtlich ist. Schließlich sind header, inv und mask wie folgt definiert. header ist eine Folge, die inv und mask aufweist, inv ist linecode1_ds() und mask ist linecode2_ds(), wie es in den Zeilen [14], [15] und [16] ersichtlich ist.

Die zuvor verwendeten vBacklog_T1, vBacklog_T2 und vBacklog_T3 sind wie folgt definiert. vBacklog_T1 ist eine Folge von 16 Bit, vBacklog:T2 ist eine Folge von 14 Bit und vBacklog_T3 ist eine Folge von 12 Bit, wie es in den Zeilen [17], [18] und [19] ersichtlich ist. Weiterhin ist vSample eine Folge, die sbData_Ch1 un d sbData_CH0 aufweist und ist magicSet eine Folge von Bitgruppen "0110", "1100" und "1010", wie es in den Zeilen [20] und [21] ersichtlich ist.

sbData_Ch0, sbData_Ch1, flushMode und flushCmd sind jeweils ein Bit und ein Bit weist einen Wert 0 oder 1 auf. Dies ist in den Zeilen [22], [23], [24], [25] und [26] ersichtlich.

Der zuvor erläuterte und in Abbildung 3 gezeigte Aufbau des seriellen Überrahmens ist wie folgt zu verstehen. Zum Beispiel weist ein Bit einen Wert von "0" oder "1" auf und ist vBacklog_T1 eine Folge, die 16 Bit aufweist. vBacklog_T1 wird als Eingabeparameter in die Funktion coded_ds() eingegeben. Der von dieser von Funktion mit diesem Eingabeparameter erzielte Ausgabewert ist vData_T1, welcher Bestandteil des Datenrahmens Typ 1 DataF_T1_ds des Nutzdatenrahmens sein kann, welcher weiterhin Bestandteil des Überrahmens SuperF_ds ist. Das heisst, die in Abbildung 3 gezeigte schematische Darstellung ist bezüglich der Richtung vom allgemeinen Aufbau des seriellen Überrahmens zum Detail der einzelnen Elemente des Rahmens von oben nach unten zu lesen und bezüglich der umgekehrten Richtung von unten nach oben, wie es sich aus der verwendeten EBNF versteht.

Nachstehend werden die einzelnen Bestandteile des abwärts zu übertragenden seriellen Überrahmens detaillierter erläutert.

emptyF_T2 und emptyF_T3 stellen leere Rahmen, das heisst Rahmen ohne Nutzdaten, dar, die von einem Sender erzeugt werden, solange an dem Sender nicht mehr als 16 Bit für DataF_T1_ds, 14 Bit für DataF_T2_ds oder 12 Bit für SyncF_ds von parallelen Nutzdaten als vBackiog_T1, vBackiog_T2 bzw. vBacklog_T3 gepuffert werden.

Der Synchronisationsrahmen SyncF_ds bezeichnet einen speziellen Rahmen, welcher im Fall von SyncF_ds = <vData_T3 magic header> Nutzdaten trägt und im Fall von SyncF_ds = emptyF_T3 nicht. Auf alle Fälle weist der Synchronisationsrahmen SyncF_ds eines von drei definierten Bitmustern magic aus dem Satz magicSet einer Breite von vier Bit an Bitpositionen [5:2] des Synchronisationsrahmens SyncF_ds auf. Die Notation [y:x], die hierin verwendet wird, bezeichnet Bitpositionen von der Bitposition x zu der Bitposition y, wobei die rechte Bitposition das niederwertigere Bit der beiden Bitpositionen aufweist. Dies gilt ebenso für die nachstehenden Erläuterungen.

Der Synchronisationsrahmen SyncF_ds wird periodisch von dem Sender erzeugt. Die Auswahl eines Bitmusters magic aus dem Satz magicSet, das in den abwärts zu übertragenden seriellen Überrahmen SuperF_ds einzufügen ist, ist durch die nachstehende Definition der Funktion select (param) beschrieben. Das Bitmuster magic ist erforderlich, um eine Rahmenausrichtung zwischen dem Sender und einem Empfänger zu bilden und zu überprüfen.

Genauer gesagt ist ein serieller Bittakt und folglich auf eine Übertragungskapazität eines seriellen Übertragungskanals unabhängig von einer Datenrate einer Anwendung, welche die Nutzdaten erzeugt. Anders ausgedrückt ist es nicht der serielle Bittakt und ist es nicht die auf eine Übertragungskapazität abgestimmte Datenrate, mit der eine Anwendung Nutzdaten erzeugt. Wenn von der Anwendung keine gültigen Nutzdaten vorhanden sind, werden die Leerrahmen emptyF_T2 und emptyF_T3 in den zu übertragenden seriellen Überrahmen SuperF_ds eingefügt. Daher ist es erforderlich, dass der Empfänger nicht nur bitsynchron, sondern auch rahmensynchron zum Sender arbeiten muss, um eine Struktur des zu übertragenden seriellen Überrahmens SuperF_ds erkennen zu können und zum Beispiel Rahmen mit Nutzdaten von Rahmen mit Fülldaten, das heisst Rahmen mit emptyF_T2 oder emptyF_T3, unterscheiden zu können.

Folglich werden von dem Sender die definierten Bitmuster magic in den zu übertragenden seriellen Überrahmen SuperF_ds eingefügt, so dass über die Position von diesen in dem zu übertragenden seriellen Überrahmen SuperF_ds auf die Struktur bzw. Rahmen des zu übertragenden seriellen Überrahmens SuperF_ds rückgeschlossen werden kann. Hierbei sind die verwendeten Bitmuster magic und die Struktur der verwendeten Rahmen sowohl dem Sender als auch dem Empfänger bekannt.

Jedoch gibt es eine Restwahrscheinlichkeit, dass das Bitmuster magic ebenso an anderen Positionen in dem zu übertragenden seriellen Überrahmen SuperF_ds zum Beispiel als Teil der seriellen Nutzdaten vorhanden ist, eine Synchronisation zwischen dem Sender und dem Empfänger erschwert oder stört und zu Datenverlusten führen kann.

Demgemäß sind hierin die Bitmuster magic nicht invariant bzw. unveränderlich, sondern weisen eine genau festgelegte Folge auf, die eine genau definierte Menge von allen möglichen Bitmustern magic durchläuft, kennen der Sender und der Empfänger die Menge von allen gültigen Bitmustern magic, kennen der Sender und der Empfänger die Reihenfolge, mit der Bitmuster magic diese Menge durchlaufen, und kennen der Sender und der Empfänger den Abstand zwischen jeweiligen eingefügten Bitmustern magic, mit dem der Sender die Bitmuster magic äquidistant bzw. mit gleichem Abstand in den zu übertragenden seriellen Überrahmen SuperF_ds einfügt und mit dem der Empfänger ein "Fenster" öffnet, in dem er das Empfangen der erwarteten Folge von Bitmustern magic überprüft.

Dadurch wird die Wahrscheinlichkeit einer fehlerhaften Synchronisation zwischen dem Sender und dem Empfänger insbesondere bei konstanten oder problematischen periodischen Nutzdaten verringert. Auf Grund dieser verringerten Wahrscheinlichkeit verkürzt sich weiterhin die Zeit, die erforderlich ist, um einer Anwendung zuverlässig anzuzeigen, dass eine Synchronisation vorhanden ist und gültige Nutzdaten an dem Empfänger ausgegeben werden. Mit den zuvor erläuterten Bitmustern magic besteht ebenso die Möglichkeit, im Fall eines Fehlers und/oder im Fall eines Beginnens eines Betriebs eines Sende/Empfangssystems Sender und Empfänger dieses Sende/Empfangssystem miteinander zu synchronisieren, ohne dass dazu zum Beispiel spezielle Lernmuster erforderlich sind. Das heisst, das Sende/Empfangssystem synchronisiert sich im Betrieb ohne zusätzliche Maßnahmen selbst.

vBacklog_T1, vBacklog_T2 und vBacklog_T3 stellen Bitfolgen mit 16, 14 bzw. 12 Bit dar, die Datenbits bezeichnen, die bei dem Sender vorübergehend zu speichern sind. Diese warten auf ein Senden unter Verwendung einer first-in-first-out-Weise und sind bei dem Empfänger zu parallelen Daten einer gegebenen Größe neu zusammenzustellen.

Der Sender erzeugt eine Anweisung flushCmd an zum Beispiel jeder ansteigenden Flanke an seinem Datensteueranschluss. Es kann jedoch auch eine abfallende Flanke oder ein Pegel an dem Datenansteueranschluss zu diesem Zweck verwendet werden. Auf ein Erfassen einer ansteigenden Flanke entleert der Sender alle noch gepufferten Anwendungsdaten bzw. Nutzdaten in dem nächsten seriellen Rahmen DataF_T1_ds, DataF_T2_ds oder SyncF_ds selbst dann, wenn an dem Sender mehr als 16 Bit für DataF_T1_ds, 14 Bit für DataF_T2_ds oder 12 Bit für SyncF_ds von parallelen Nutzdaten als vBacklog_T1, vBacklog_T2 bzw. vBacklog_T3 gepuffert werden, und fügt einen leeren Rahmen mit emptyF_T2 oder emptyF_T3 ein, wodurch mittels flushCmd ein Signalisieren des Ausführens eines Entleerungsereignisses erfolgt. Ein leerer Rahmen mit emptyF_T2 oder emptyF_T3, der ein aktives flushcmd aufweist, zeigt dem Empfänger an, dass die Nutzdaten des vorhergehenden (nicht leeren) Rahmens zu verwenden sind, um parallele Anwendungsdaten einer vorab definierten Breite zusammenzustellen und die verbleibenden Bits zu verwerfen. Die Anweisung flushCmd wird von dem Sender ausgegeben, um ein neues Ausrichten von Grenzen eines Anwendungsdatenworts bei dem Empfänger zu erzwingen.

flushMode stellt ein Bit dar, das ein Kennzeichner von flushCmd ist und von dem Sender erzeugt wird, der die Anweisung flushCmd ausführt. Wenn es aktiv ist, zeigt flushMode an, dass die Anzahl von Nutzdatenbits die von dem vorhergehenden (nicht leeren) Rahmen übertragen werden, welche zum neu Zusammenstellen von Anwendungsdaten bei dem Empfänger zu verwenden sind, größer als eine vorab definierte Breite des Anwendungsdatenworts ist. Anders ausgedrückt muss der Empfänger, wenn flushMode inaktiv ist, aus dem vorhergehenden Rahmen so viele Nutzdaten wie erforderlich erfassen, um den bereits gepufferten Überhang vBacklog_T1, vBacklog_T2 oder vBacklog_T3 aufzufüllen, um genau ein einzelnes Anwendungsdatenwort einer vorab definierten Breite neu zusammenzustellen. Es wird nicht zugelassen, dass verbleibende Nutzdatenbits zu dem Überhang vBacklog_T1, vBacklog_T2 oder vBacklog_T3 der Anwendungsdaten hinzugefügt werden, das heisst, sie werden verworfen. Wenn flushMode aktiv ist, muss der Empfänger zusätzlich ein zweites Anwendungsdatenwort einer vorab definierten Breite aus dem vorhergehenden Rahmen neu zusammenstellen, bevor die verbleibenden Nutzdatenbits verworfen werden.

sbData_Ch0 und sbData_Ch1 sind Abtastwerte von Seitenbandanschlüssen 0 und 1 des Senders.

inv ist ein Bit und Teil des Rahmenheaders header, das anzeigt, dass der gesamte Rahmen ausgenommen der zwei Headerbits vor dem seriellen Senden invertiert worden ist. Auf diese Weise wird ein DC-Abgleich bzw. eine DC-Balance bzw. ein Gleichgrößenabgleich des zu übertragenden seriellen Überrahmens SuperF_ds gesteuert, um eine AC-Kopplung zuzulassen.

mask ist ein Bit und ein Teil des Rahmenheaders header, der anzeigt, ob eine definierte kombinatorische Maske vor dem seriellen Senden zum Beispiel mittels einer Exklusiv-ODER-Verknüpfung an den Nutzdaten angewendet worden ist. Die maximale Länge von aufeinanderfolgenden Bits eines identischen Werts von "0" oder "1" wird auf diese Weise beschränkt, um eine obere Grenze eines Zeitintervalls ohne Übergänge des seriellen Signals zu gewährleisten und eine Interferenz zwischen Symbolen zu verringern.

Zu jeder Zeit, zu der ein Rahmen DataF_T1_ds, DataF_T2_ds oder SyncF_ds bei dem Sender zusammengestellt werden muss, werden inv und mask des Rahmenheaders header aktualisiert und danach eingefroren. Der Ist-Zustand von inv und mask des Rahmenheaders header beeinflusst einige Bitfelder des zusammenzustellenden Rahmens, wie es zuvor erläutert worden ist, bevor der Rahmen schließlich zu einem Parallel/Seriell-Wandler des Senders gesendet wird. inv und mask des Rahmenheaders header werden als Teil des seriellen Rahmens zu dem Empfänger gesendet, was eine inverse Transformation von Daten bei dem Empfänger steuert.

Wie es in den Zeilen [5] und [6] der Abbildung 3 ersichtlich ist, sind emptyF_T2 und emptyF_T3 in leeren Rahmen ohne Nutzdaten wie folgt durch Bedingungen (I), (II) und (III) gekennzeichnet:

(I) emptyF_T2[17:2] bzw. emptyF_T3 ist DC-abgeglichen;

(II) emptyF_T2[17:10] bzw. emptyF_T2[17:10] "01001011" ist;

(III) emptyF_T2[1:0] bzw. emptyF_T2[1;0] ist "00" oder "11".

Die Bedingungen (I) und (III) bilden zusammen eine hinreichende Bedingung aus, um leere Rahmen mit emptyF_T2 und emptyF_T3 zu identifizieren.

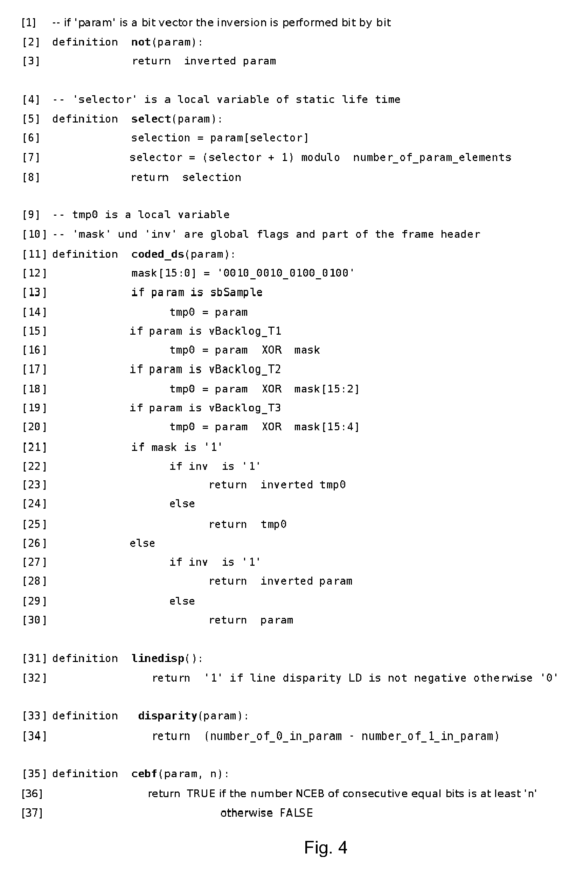

Abbildung 4 zeigt eine schematische Darstellung einer Definition von Funktionen in der in Abbildung 3 gezeigten Struktur.

Es ist anzumerken, dass die hier und nachstehend gezeigten Erläuterungen von Definitionen von Funktionen zur Erleichterung des Verständnisses anhand eines Pseudocodes durchgeführt werden. Jedoch ist der verwendete Pseudocode nicht als beschränkend aufzufassen. Vielmehr ist jeder Code zweckmäßig, der ein Verfahren oder eine Funktionsweise einer Vorrichtung derart auslegt, dass sie den hierin beschriebenen seriellen Datenrahmen erzeugen, senden und empfangen können, wie es mit dem angegebenen Pseudocode der Fall ist.

Die Zeilen [1] bis [3] zeigen die Definition der Funktion not(param). Die Funktion not(param) gibt als Reaktion auf den Eingabeparameter "param" den invertierten Eingabeparameter "inverted param" zurück, wobei in dem Fall, in dem der Eingabeparameter "param" ein Bitvektor ist, die Inversion bitweise durchgeführt wird.

Die Zeilen [4] bis [8] zeigen die Definition der Funktion select(param). Die Funktion select(param) gibt als Reaktion auf den Eingabeparameter param eines von Elementen des Eingabeparameters param zurück. In dem Fall von magic = select(magicset) und magicSet = <('0110' ('1100') ('1010')> in Abbildung 3 bedeutet dies unter der Annahme, dass die Variable selector, die als eine Laufvariable dient, einen Wert "0" aufweist, "1010" ausgewählt wird, anschließend die Variable selector um "1" erhöht wird und der Modulo dieser erhöhten Variable selector von der Anzahl der Elemente des Eingabeparameters "magicSet" die neue Variable "selector" ausbildet. Dies wird durchgeführt, um ein Zurücksetzen der Variable selector nach Erreichen der Anzahl der Elemente des Eingabeparameters magicSet zu vermeiden. Wird zum Beispiel die Variable selector von "2" auf "3" erhöht, so wird der Modulo 3 von 3 ausgebildet, was "0" ergibt, so dass die neue Variable selector erneut "0" ist und somit wieder mit der Auswahl des ersten Elements des Eingabeparameters magicSet fortgefahren wird.

Die Zeilen [9] bis [30] zeigen die Definition der Funktion coded_ds(param). Wie es aus dieser Definition ersichtlich ist, werden vBacklogT1, vBacklog_T2 und vBacklog_T3 mit einer vorab definierten Maske bzw. einem definierten Teil von dieser einer Exklusiv-ODER-Verknüpfung unterzogen. Abhängig von den Werten von Bits mask und inv wird dann ein zweckmäßiger Parameter von de Funktion coded_ds(param) zurückgegeben.

Die Zeilen [31] und [32] zeigen die Definition der Funktion linedisp(). Diese Funktion gibt einen Wert "1" zurück, wenn die zuvor erläuterte Leitungsdisparität LD nicht negativ ist. Ansonsten gibt sie "0" zurück.

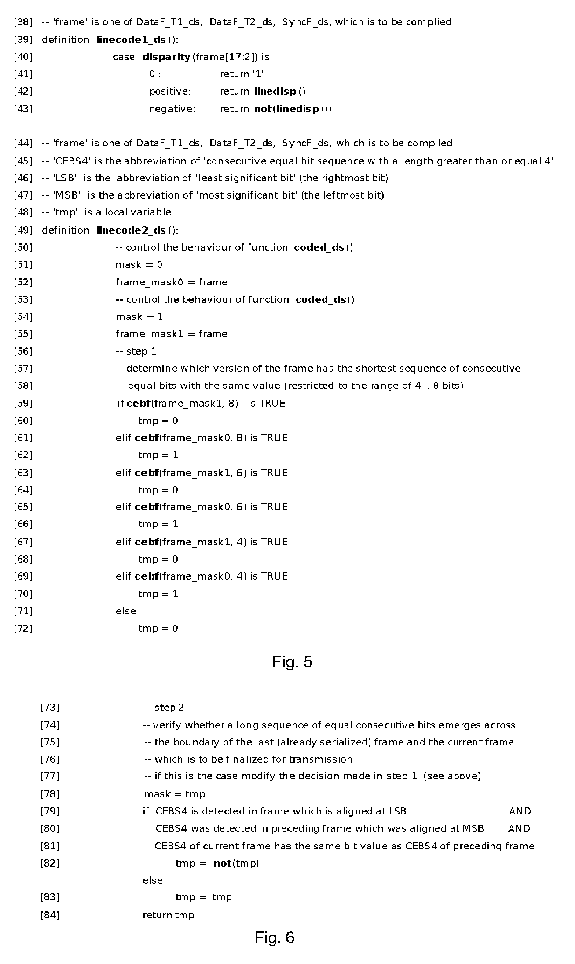

Die Zeilen [35] bis [37] in Abbildung 4 und die Zeile [38] in Abbildung 5 zeigen die Definition der Funktion cebf(param, n).

Es ist anzumerken, dass Abbildung 5 eine Fortsetzung von Abbildung 4 ist.

Die Funktion cebf(param, n) gibt einen Wert "TRUE" zurück, wenn die Anzahl NCEB von aufeinanderfolgend gleichen Bits des Eingabeparameters param mindestens gleich dem Eingabeparameter n ist. Ansonsten gibt sie den Wert "FALSE" zurück.

Die Zeilen [39] bis [43] zeigen die Definition der Funktion linecodel_ds(). Wie es ersichtlich ist, gibt diese Funktion abhängig von einem Wert eines bestimmten Teils des Rückgabewerts der Funktion disparity(param) einen Disparität anzeigenden Wert des bestimmten Teils dieses Rückgabewerts zurück.

Die Zeilen [44] bis [72] in Abbildung 5 und die Zeilen [73] bis [84] in Abbildung 6 zeigen die Definition der Funktion linecode2_ds(). Die Funktion linecode2_ds() bestimmt in einem Schritt 1, welche Version eines Rahmens DataF_T1, DataF_T2, SyncF_ds, der zusammenzustellen ist, eine kürzeste Folge von aufeinanderfolgenden gleichen Bits aufweist, wobei dies auf den Bereich 4 ... 8 Bits beschränkt ist. Die Funktion linecode2_ds() überprüft in einem Schritt 2, ob eine lange Folge von aufeinanderfolgenden gleichen Bits über eine Grenze des letzten bereits serialisierten Rahmens und des derzeitigen Rahmen hinausgeht, welcher für ein Senden fertig zu stellen ist. Wenn dies der Fall ist, wird die in dem Schritt 1 getroffene Entscheidung geändert.

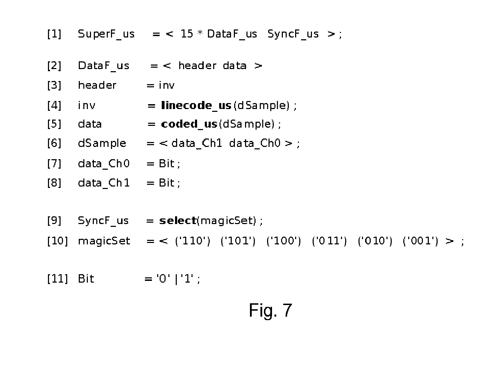

Abbildung 7 zeigt eine schematische Darstellung einer Struktur eines aufwärts zu übertragenden seriellen Datenrahmens.

Diese Struktur des aufwärts zu übertragenden Datenrahmens wird nachstehend im Detail erläutert.

Wie es in Zeile [1] ersichtlich ist, weist jeder serielle Überrahmen SuperF_us fünfzehn Nutzdatenrahmen DataF_us und einen Synchronisationsrahmen SyncF_us auf.

Wie es in Zeile [2] ersichtlich ist, weist der Nutzdatenrahmen DataF_us eine Folge aus header und data auf.

header ist inv und inv ist linecode_us(dSample), wie es in den Zeilen [4] und [5] ersichtlich ist. data ist coded_us(dSample) Weiterhin ist dsample eine Folge, die Data_Ch1 und Data_Ch0 aufweist.

Data_Ch0 und Data_Ch1 sind jeweils ein Bit und ein Bit weist einen Wert "0" oder "1" auf. Dies ist in den Zeilen [6], [7], [8] und [11] ersichtlich.

Der Synchronisationsrahmen Sync_us ist select(magicSet), wobei magicSet eine Folge von Bitgruppen "110", "101", "100", "011", "010" und "001" ist. Dies ist in den Zeilen [9] und [10] ersichtlich.

Nachstehend werden die einzelnen Bestandteile des aufwärts zu übertragenden seriellen Überrahmens detaillierter erläutert.

Der Synchronisationsrahmen SyncF_us bezeichnet einen speziellen Rahmen, welcher keine Nutzdaten trägt, jedoch eines von sechs definierten Bitmustern aus dem Satz magicSet einer Breite von drei Bit aufweist.

Der Synchronisationsrahmen SyncF_us wird periodisch von dem Empfänger erzeugt. Die Auswahl eines Bitmusters aus dem Satz magicSet, das in den aufwärts zu übertragenden seriellen Überrahmen SuperF_us einzufügen ist, ist durch die nachstehende Definition der Funktion select(param) beschrieben. Das Bitmuster ist erforderlich, um eine Rahmenausrichtung zwischen dem Empfänger und dem Sender zu bilden und zu überprüfen.

Data_Ch0 und Data_Ch1 sind Abtastwerte von Datenanschlüssen 0 und 1 des Empfängers.

inv ist ein Bit und bildet den Rahmenheader header aus, der anzeigt, dass der gesamte Rahmen ausgenommen des Rahmenheaders header vor dem seriellen Senden invertiert worden ist. Auf diese Weise wird ein DC-Abgleich des zu übertragenden seriellen Überrahmens SuperF_us gesteuert, um eine AC-Kopplung zuzulassen.

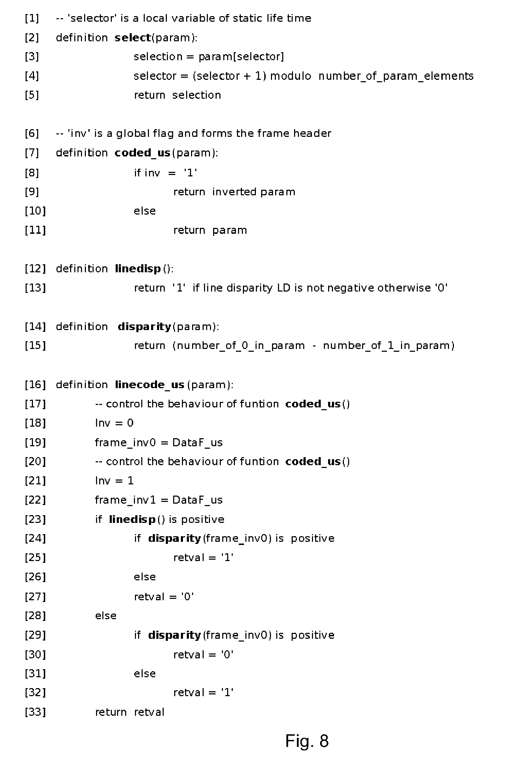

Abbildung 8 zeigt eine schematische Darstellung einer Definition von Funktionen in der in Abbildung 7 gezeigten Struktur.

Es ist anzumerken, dass in Abbildung 8 definierte Funktionen mit gleichen oder ähnlichen Bezeichnungen wie in Abbildung 4 bis Abbildung 6 gleiche oder ähnliche Wirkungsweisen aufweisen, so dass eine detaillierte Erläuterung dieser Funktionen an dieser Stelle weggelassen wird.

## Patentansprüche

1. Verfahren zum Übertragen eines seriellen Datenrahmens, das die Schritte aufweist:
Erzeugen mindestens eines Nutzdatenrahmens, in dem mindestens zu übertragende Nutzdaten vorhanden sind;
Erzeugen mindestens eines Synchronisationsrahmens, in dem mindestens zu übertragende einer Synchronisation dienende Daten vorhanden sind; Ausbilden des seriellen Datenrahmens aus einer vorab definierten Folge des mindestens einen Nutzdatenrahmens und des mindestens einen Synchronisationsrahmens;
Senden des seriellen Datenrahmens von einer Sendeeinrichtung zu einer Empfangseinrichtung; und
Empfangen des gesendeten seriellen Datenrahmens an der Empfangseinrichtung, wobei
in einer Mehrzahl von aufeinanderfolgenden seriellen Datenrahmen die der Synchronisation dienenden Daten in den Synchronisationsrahmen der seriellen Datenrahmen ein vorbestimmtes Muster aufweisen, in einer vorbestimmten Folge gesendet werden und an einer vorbestimmten Position in einem jeweiligen Synchronisationsrahmen eines jeweiligen seriellen Datenrahmens vorhanden sind.

2. Verfahren nach Anpruch 1, wobei Synchronisationsrahmen der aufeinanderfolgenden seriellen Datenrahmen zu übertragende Nutzdaten aufweisen.

3. Verfahren nach Anspruch 1 oder 2, wobei der serielle Datenrahmen eine Mehrzahl von Nutzdatenrahmen und einen Synchronisationsrahmen aufweist.

4. Verfahren nach einem der Ansprüche 1 bis 3, wobei das vorbestimmte Muster in Abhängigkeit von einer vorbestimmten Regel aus einer vorab definierten Menge an vorbestimmten Mustern ausgewählt wird, um die vorbestimmte Folge auszubilden.

5. Verfahren nach einem der Ansprüche 2 bis 4, wobei Nutzdatenrahmen und zu übertragende Nutzdaten aufweisende Synchronisationsrahmen einen Merker aufweisen, der anzeigt, ob zu übertragende Nutzdaten invertiert sind.

6. Verfahren nach einem der Ansprüche 1 bis 5, wobei mindestens ein Teil der zu übertragenden Nutzdaten vor dem Senden mittels einer logischen Verknüpfung mit einer Maske maskiert wird.

7. Verfahren nach Anspruch 6, wobei der Nutzdatenrahmen einen Merker aufweist, der anzeigt, ob ein Maskieren der zu übertragenden Nutzdaten durchgeführt worden ist oder nicht.

8. Verfahren nach Anspruch 6 oder 7, wobei das Maskieren der zu übertragenden Nutzdaten in Abhängigkeit von einer maximal zulässigen Länge von aufeinanderfolgenden Bits eines gleichen Werts der zu übertragenden Nutzdaten durchgeführt wird.

9. Verfahren zum Übertragen eines seriellen Datenrahmens, das die Schritte aufweist:
Erzeugen mindestens eines Nutzdatenrahmens, in dem mindestens zu übertragende Nutzdaten vorhanden sind;
Erzeugen mindestens eines Synchronisationsrahmens, in dem mindestens zu übertragende einer Synchronisation dienende Daten vorhanden sind; Ausbilden des seriellen Datenrahmens aus einer vorab definierten Folge des mindestens einen Nutzdatenrahmens und des mindestens einen Synchronisationsrahmens;
Senden des seriellen Datenrahmens von einer Sendeeinrichtung zu einer Empfangseinrichtung; und
Empfangen des gesendeten seriellen Datenrahmens an der Empfangseinrichtung, wobei
mindestens ein Teil der zu übertragenden Nutzdaten vor dem Senden mittels einer logischen Verknüpfung mit einer Maske maskiert wird.

10. Verfahren nach Anspruch 9, wobei der serielle Datenrahmen eine Mehrzahl von Nutzdatenrahmen und einen Synchronisationsrahmen aufweist.

11. Verfahren nach Anspruch 9 oder 10, wobei der Nutzdatenrahmen einen Merker aufweist, der anzeigt, ob ein Maskieren der zu übertragenden Nutzdaten durchgeführt worden ist oder nicht.

12. Verfahren nach einem der Ansprüche 9 bis 11, wobei das Maskieren der zu übertragenden Nutzdaten in Abhängigkeit von einer maximal zulässigen Länge von aufeinanderfolgenden Bits eines gleichen Werts der zu übertragenden Nutzdaten durchgeführt wird.

13. Vorrichtung zum Übertragen eines seriellen Datenrahmens, die Einrichtungen aufweist, die zum Durchführen eines Verfahrens nach einem der vorhergehenden Ansprüche ausgelegt sind.

## Geänderte Patentansprüche

### Geänderte Patentansprüche gemäss Regel 137(2) EPÜ.

**1.** Verfahren zum Übertragen eines seriellen Datenrahmens (SuperF_ds, SuperF_us), das die Schritte aufweist:
Erzeugen einer Mehrzahl von Nutzdatenrahmen (DataF_T1_ds, DataF_T2_ds, DataF_us), in denen mindestens zu übertragende Nutzdaten vorhanden sind; Erzeugen mindestens eines Synchronisationsrahmens (SyncF_ds, SyncF_us), in dem mindestens zu übertragende einer Synchronisation dienende Daten vorhanden sind;
Ausbilden des seriellen Datenrahmens (SuperF_ds, SuperF_us) aus einer vorab definierten Folge der Mehrzahl der Nutzdatenrahmen (DataF_T1_ds, DataF_T2_ds, DataF_us) und eines des mindestens einen
Synchronisationsrahmens (SyncF_ds, SyncF_us);
Senden des seriellen Datenrahmens (SuperF_ds, SuperF_us) von einer Sendeeinrichtung (1, 2) zu einer Empfangseinrichtung (1, 2); und
Empfangen des gesendeten seriellen Datenrahmens (SuperF_ds, SuperF_us) an der Empfangseinrichtung (1, 2), wobei
in einer Mehrzahl von aufeinanderfolgenden seriellen Datenrahmen (SuperF_ds, SuperF_us) die der Synchronisation dienenden Daten in den Synchronisationsrahmen (SyncF_ds, SyncF_us) der seriellen Datenrahmen (SuperF_ds, SuperF_us) ein vorbestimmtes Muster (magic) aufweisen, in einer vorbestimmten Folge gesendet werden und an einer vorbestimmten Position in einem jeweiligen Synchronisationsrahmen (SyncF_ds, SyncF_us) eines jeweiligen seriellen Datenrahmens (SuperF_ds, SuperF_us) vorhanden sind,
**dadurch gekennzeichnet, dass**
das vorbestimmte Muster (magic) in Abhängigkeit von einer vorbestimmten Regel aus einer vorab definierten Menge (magicSet) an vorbestimmten Mustern (magic) ausgewählt wird, um die vorbestimmte Folge auszubilden.

**2.** Verfahren nach Anspruch 1, wobei Synchronisationsrahmen (SyncF_ds, SyncF_us) der aufeinanderfolgenden seriellen Datenrahmen (SuperF_ds, SuperF_us) zu übertragende Nutzdaten aufweisen.

**3.** Verfahren nach Anspruch 2, wobei Nutzdatenrahmen (DataF_T1_ds, DataF_T2_ds, DataF_us) und zu übertragende Nutzdaten aufweisende Synchronisationsrahmen (SyncF_ds, SyncF_us) einen Merker (inv) aufweisen, der anzeigt, ob zu übertragende Nutzdaten invertiert sind.

**4.** Verfahren nach einem der Ansprüche 1 bis 3, wobei mindestens ein Teil der zu übertragenden Nutzdaten vor dem Senden mittels einer logischen Verknüpfung mit einer Maske maskiert wird.

**5.** Verfahren nach Anspruch 4, wobei Nutzdatenrahmen (DataF_T1_ds, DataF_T2_ds, DataF_us) einen Merker (mask) aufweisen, der anzeigt, ob ein Maskieren der zu übertragenden Nutzdaten durchgeführt worden ist oder nicht.

**6.** Verfahren nach Anspruch 4 oder 5, wobei das Maskieren der zu übertragenden Nutzdaten in Abhängigkeit von einer maximal zulässigen Länge von aufeinanderfolgenden Bits eines gleichen Werts der zu übertragenden Nutzdaten durchgeführt wird.

**7.** Vorrichtung zum Übertragen eines seriellen Datenrahmens (SuperF_ds, SuperF_us), die Einrichtungen aufweist, die zum Durchführen eines Verfahrens nach einem der Ansprüche 1 bis 6 ausgelegt sind.
